# EUROPÄISCHE PATENTSCHRIFT

(11) **EP 3 585 643 B1**
(45) Veröffentlichungstag und Bekanntmachung des Hinweises auf die Patenterteilung: **06.01.2021**
(21) Anmeldenummer: 18703965.6
(22) Anmeldetag: 05.02.2018
(51) Int. Cl.: B60L 53/30, B60L 53/66

(54) **LADEVORRICHTUNG ZUM LADEN EINES ELEKTRISCH ANGETRIEBENEN KRAFTFAHRZEUGS MIT MIT ZUGRIFF AUF EIN DATENNETZWERK UND VERFAHREN ZUM BETREIBEN EINER SOLCHEN LADEVORRICHTUNG**
CHARGING DEVICE FOR CHARGING AN ELECTRICALLY DRIVEN MOTOR VEHICLE HAVING ACCESS TO A DATA NETWORK AND METHOD FOR OPERATING A CHARGING DEVICE OF THIS KIND
DISPOSITIF DE CHARGE CONÇU POUR CHARGER UN VÉHICULE AUTOMOBILE À ENTRAÎNEMENT ÉLECTRIQUE AVEC ACCÈS À UN RÉSEAU DE DONNÉES ET PROCÉDÉ POUR FAIRE FONCTIONNER UN TEL DISPOSITIF DE CHARGE

(30) Priorität: 21.02.2017 DE 102017202745
(43) Veröffentlichungstag der Anmeldung: 01.01.2020
(73) Patentinhaber: Audi AG, 85045 Ingolstadt (DE)
(72) Erfinder: KRAMMER, Johann, 86556 Kühbach (DE); KNIFFKA, Dominik, 92334 Berching (DE); PARIS, Gerhard, 85051 Ingolstadt (DE); VOGEL, Axel, 85053 Ingolstadt (DE)
(86) Internationale Anmeldenummer: PCT/EP2018/052762
(87) Internationale Veröffentlichungsnummer: WO 2018/153641

(56) Entgegenhaltungen:
- DE-A1-102010 026 689
- US-A1- 2012 150 670
- US-A1- 2013 029 595
- US-A1- 2015 183 333

## Beschreibung

Die Erfindung betrifft eine Ladevorrichtung zum Laden eines elektrisch angetriebenen Kraftfahrzeugs sowie ein Verfahren zum Betreiben der Ladevorrichtung.

Durch Ladevorrichtungen für elektrisch angetriebene Kraftfahrzeuge ist es möglich, eine Verbindung zum Datenaustausch zwischen der Ladevorrichtung und dem zu ladenden elektrisch angetriebenen Kraftfahrzeug zu bilden. Darüber kann dem Kraftfahrzeug ein Zugang zum Internet bereitgestellt werden. Das elektrisch angetriebene Kraftfahrzeug benötigt dafür eine Authentifizierung basierend auf einem Zertifikat, um Zugang zu dieser Verbindung zum Datenaustausch zu erhalten. Bisher ist es jedoch nicht möglich, andere Geräte außer dem elektrisch angetriebenen Kraftfahrzeug an dieser Verbindung zum Datenaustausch teilhaben zu lassen, da die zertifikatsbasierte Authentifizierung nur für Kraftfahrzeuge ausgestellt wird.

So zeigt die DE 10 2009 019 753 A1 ein Verfahren und eine Anordnung zur Datenkommunikation zwischen einem Diensteanbieter und einem Kraftfahrzeug mit elektrischem Antrieb. Die Kommunikationsverbindung zwischen dem Kraftfahrzeug und dem Diensteanbieter wird über eine erste drahtlose Verbindung hergestellt. Befindet sich das Kraftfahrzeug an einer Ladestation und ist über eine Ladeverbindung zum Laden des im Kraftfahrzeug vorgesehenen Akkumulators angeschlossen, wird eine weitere Kommunikationsverbindung zwischen dem Kraftfahrzeug und dem Diensteanbieter über die Ladestation hergestellt. Eine solche Verbindung wird jedoch nicht weiteren Geräten neben dem Kraftfahrzeug zur Verfügung gestellt.

Die DE 10 2011 056 651 A1 zeigt eine Computersäule, die als Empfangssäule, Ladesäule, Kommunikationssäule, Werbeplattform oder Ähnliches Anwendung findet.

Die DE 10 2009 045 711 A1 zeigt eine Datenübertragungs-, Versorgungs- und Ladevorrichtung mit einer Datenschnittstelle. Diese kann sowohl Energie an einen Energiespeicher als auch fahrzeug- oder fahrerbezogene Daten über ein Ladekabel oder eine elektrische Leitung übertragen. Dies dient für die Aktualisierung von fahrzeuginternen Systemen sowie ihrer Überprüfung. Die Vorrichtung kann ferner eine Kommunikationseinheit umfassen, wodurch Daten auch während der Fahrt ohne einen elektrischen Anschluss empfangen oder gesendet werden können.

Die DE 11 2010 003 507 T5 zeigt ein Verfahren zum Datenaustausch zwischen einem Fahrzeug und einem Server. Das Fahrzeug weist eine Batterie und eine erste Kommunikationseinheit auf. Der Server weist eine zweite Kommunikationseinheit auf. Für das Verfahren verbindet sich die erste Kommunikationseinheit mit der zweiten Kommunikationseinheit über eine Verbindungsleitung. Die Verbindungsleitung zum Laden der Batterie ist über eine Strom- oder Energieversorgungseinheit ausgebildet. Ein Austausch von Daten zwischen der ersten Kommunikationseinheit und der zweiten Kommunikationseinheit über die Verbindungsleitung ist möglich.

Die WO 2013/019566 A1 zeigt Systeme, Methoden und Apparaturen für einen drahtlosen Datentransfer. In einer Ausführungsform ist ein Energieübertragungsgerät vorgesehen. Dieses umfasst einen Transmitter und eine Controllerschaltung, um eine erste drahtlose Kommunikationsverbindung mit einem Elektrofahrzeug herzustellen. Die Controllerschaltung kann ferner eine zweite drahtlose Kommunikationsverbindung zu dem Elektrofahrzeug aufbauen, um zu detektieren, dass dieses geladen ist.

US2013029595 zeigt ein Kommunikationssystem für das Laden von elektrischen Fahrzeugen mit einem zusätzlichen Kommunikationskanal der Inhalte zur Verfügung stellen kann.

Diese vorstehend im Stand der Technik gezeigten Vorrichtungen und Verfahren ermöglichen es nicht, weiteren Geräten neben dem elektrisch angetriebenen Kraftfahrzeug Zugang zu einer Kommunikationsverbindung eines Netzwerks zu ermöglichen.

Es ist die Aufgabe der vorliegenden Erfindung, eine technische Lösung bereitzustellen, mittels welcher ein situationsgerechtes Erweitern der Reichweite eines lokalen Netzwerks, das einem Kraftfahrzeug mittels einer Ladevorrichtung zu Verfügung steht, ermöglicht wird.

Diese Aufgabe wird durch eine Ladevorrichtung zum Laden eines elektrisch angetriebenen Kraftfahrzeugs sowie durch ein Verfahren zum Betreiben dieser Ladevorrichtung gelöst. Vorteilhafte Ausgestaltungen mit zweckmäßigen und nicht trivialen Weiterbildungen der Erfindung sind in den abhängigen Ansprüchen angegeben.

Die erfindungsgemäße Ladevorrichtung zum Laden eines elektrisch angetriebenen Kraftfahrzeugs umfasst eine erste Schnittstelle, eine zweite Schnittstelle, zumindest eine weitere Schnittstelle und eine Steuereinrichtung. Mittels der ersten Schnittstelle ist eine erste Verbindung zwischen der Ladevorrichtung und einem lokalen Netzwerk herstellbar. Mittels der zweiten Schnittstelle ist eine zweite Verbindung zwischen dem elektrisch angetriebenen Kraftfahrzeug und der Ladevorrichtung herstellbar, sodass bei hergestellter erster Verbindung ein Datenaustausch zwischen dem lokalen Netzwerk und dem Kraftfahrzeug ermöglicht wird. Mittels der zumindest einen weiteren Schnittstelle ist eine weitere Verbindung zwischen einem weiteren Teilnehmer und der Ladevorrichtung herstellbar, sodass bei hergestellter erster Verbindung ein Datenaustausch zwischen dem lokalen Netzwerk und dem weiteren Teilnehmer ermöglicht wird. Die Steuereinrichtung ist dazu eingerichtet, ein vorgegebenes Zertifikat vom Kraftfahrzeug abzufragen und nur im Fall einer erfolgreichen Authentifizierung anhand des vom Kraftfahrzeug bereitgestellten Zertifikats die zweite Verbindung herzustellen. Die Steuereinrichtung ist dazu eingerichtet, die weitere Verbindung ohne Abfrage und Authentifizierung des vorgegebenen Zertifikats herzustellen.

Bei der Ladevorrichtung gemäß der vorliegenden Erfindung handelt es sich um jede Vorrichtung, welche dazu geeignet ist, ein elektrisch angetriebenes Kraftfahrzeug zu laden. Beispielsweise kann es sich dabei um eine Ladesäule, wie z.B. eine Gleichstrom-Ladesäule, für elektrisch angetriebene Kraftfahrzeuge oder eine Ladevorrichtung, umfassend ein mobiles Ladekabel, bevorzugt eine Mode 2-Ladevorrichtung nach der Norm IEC 61851-1, handeln.

Bei dem elektrisch angetriebenen Kraftfahrzeug gemäß der vorliegenden Erfindung kann es sich beispielsweise um ein Elektrofahrzeug, ein Hybridelektrofahrzeug oder um ein Brennstoffzellenfahrzeug handeln.

Bei der ersten Schnittstelle, mittels welcher eine erste Verbindung zwischen der Ladevorrichtung und einem lokalen Netzwerk herstellbar ist, handelt es sich um jede Schnittstelle, die in der Lage ist, eine solche Verbindung aufzubauen. Bevorzugt handelt es sich bei der ersten Schnittstelle gemäß der vorliegenden Erfindung um eine WLAN (Wireless Local Area Network)-Schnittstelle oder eine PLC (Powerline-Communication)-Schnittstelle der Ladevorrichtung, worüber sich diese mit dem lokalen Netzwerk verbinden kann. Bei PLC erfolgt eine Übertragung von Daten über ein Stromkabel.

Die erste Verbindung ist eine Verbindung zwischen der Ladevorrichtung und dem lokalen Netzwerk, z.B. einem Heimnetzwerk. Eine solche Verbindung kann beispielsweise als Kommunikationsverbindung ausgebildet sein. Eine Verbindung ist generell durch die Phasen des Verbindungsaufbaus, der Datenübermittlung und des Verbindungsabbaus gekennzeichnet.

Unter einem lokalen Netzwerk gemäß der vorliegenden Erfindung ist ein Rechnernetz zu verstehen, wie es zum Beispiel in Heimnetzen oder Unternehmen eingesetzt wird. Dieses lokale Netzwerk kann z.B. als LAN (Local Area Network) oder WLAN (Wireless Local Area Network) ausgebildet sein. Ein lokales Netzwerk kann technisch unterschiedlich aufgebaut werden. Typischerweise erfolgt die Verkabelung eines lokalen Netzwerks ab einer gewissen Größe als strukturierte Verkabelung.

Die zweite Schnittstelle, mittels welcher eine zweite Verbindung zwischen dem Kraftfahrzeug und der Ladevorrichtung herstellbar ist, ist jede Schnittstelle, die die zweite Verbindung herstellen kann. Bevorzugt ist die zweite Schnittstelle als Stecker der Ladevorrichtung, besonders bevorzugt als Stecker des Ladekabels der Ladevorrichtung, ausgebildet. Ein solcher Stecker kann dann in die zugehörige Schnittstelle des elektrisch angetriebenen Kraftfahrzeugs eingebracht werden und so die zweite Verbindung aufbauen.

Die zweite Verbindung gemäß der vorliegenden Erfindung ist jede Verbindung, die eine Verbindung zwischen dem Kraftfahrzeug und der Ladevorrichtung herstellt. Bevorzugt erfolgt dies über das Ladekabel, welches von der Ladevorrichtung umfasst wird.

Die weitere Schnittstelle, mittels welcher eine weitere Verbindung zwischen einem weiteren Teilnehmer und der Ladevorrichtung herstellbar ist, ist jede weitere Schnittstelle, mittels welcher die weitere Verbindung hergestellt werden kann. Dabei handelt es sich bevorzugt um eine WLAN-Schnittstelle.

Die weitere Verbindung gemäß der vorliegenden Erfindung ist jede Verbindung, welche zwischen einem weiteren Teilnehmer und der Ladevorrichtung herstellbar ist. Bevorzugt handelt es sich bei der weiteren Verbindung um eine von der zweiten Verbindung getrennte Verbindung. Eine getrennte Verbindung liegt vor, wenn über eine Schnittstelle, die generell den Aufbau der Verbindung ermöglicht, keine Daten gesendet oder empfangen werden können. Vorliegend bewirkt dies, dass kein Datenaustausch von dem elektrisch angetriebenen Kraftfahrzeug zu dem weiteren Teilnehmer und umgekehrt möglich ist. Dadurch wird bevorzugt bei der hergestellten weiteren Verbindung zwischen dem weiteren Teilnehmer und der Ladevorrichtung, bei hergestellter erster Verbindung, ein erster Kanal zum Datenaustausch zwischen dem lokalen Netzwerk und dem weiteren Teilnehmer gebildet. Dieser erste Kanal ist von einem zweiten Kanal getrennt. Der zweite Kanal wird bei hergestellter zweiter und erster Verbindung gebildet und ermöglicht den Datenaustausch zwischen dem elektrisch angetriebenen Kraftfahrzeug und dem lokalen Netzwerk. Ein getrennter Kanal bedeutet, dass die Teilnehmer des ersten Kanals nicht auf den zweiten Kanal zugreifen können und umgekehrt auch die Teilnehmer des zweiten Kanals nicht auf den ersten Kanal.

Die Steuereinrichtung gemäß der vorliegenden Erfindung ist jede Einrichtung, die dazu in der Lage ist, ein Zertifikat abzufragen und eine Authentifizierung vorzunehmen. Ein Zertifikat ist ein digitaler Datensatz, der bestimmte Eigenschaften von Personen oder Objekten bestätigt und dessen Authentizität und Integrität durch kryptographische Verfahren geprüft werden können.

Unter einer Authentisierung ist z.B. die Eingabe von Login-Daten, beispielsweise mittels Username und Passwort, zu verstehen. Dadurch wird eine Identität des Nutzers, der die Login-Daten eingibt, behauptet. Eine Authentisierung kann aber auch z.B. durch ein vorgegebenes Zertifikat erfolgen. Wenn ein Nutzer ein vorgegebenes Zertifikat besitzt, welches von der Servereinrichtung abgefragt wird, ist das mit einer Eingabe von Login-Daten vergleichbar. Die Überprüfung der behaupteten Authentisierung, hier des vorgegebenen Zertifikats des Kraftfahrzeugs, inklusive des Ergebnisses der Prüfung, wird als Authentifizierung bezeichnet. Vorliegend erfolgt die Authentifizierung des elektrisch angetriebenen Kraftfahrzeugs durch die Servereinrichtung, um sicher zu gehen, dass dieses eine Zugangsberechtigung zu dem lokalen Netzwerk besitzt.

Durch die erfindungsgemäße Ladevorrichtung sind neben dem elektrisch angetriebenen Kraftfahrzeug auch weitere Teilnehmer dazu in der Lage, auf ein lokales Netzwerk, zum Beispiel ein Heimnetzwerk des Nutzers, zuzugreifen. Dadurch kann für die Übertragung von größeren Datenmengen auf die weiteren Teilnehmer das Heimnetzwerk genutzt werden. Durch die erfindungsgemäße Ladevorrichtung kann zudem die Reichweite eines lokalen Netzwerks, wie z.B. eines Heimnetzwerks, derart erweitert werden, dass es in Bereichen weiterhin zugänglich ist, wo das lokale Netzwerk in der Regel ohne Ladevorrichtung nicht mehr, z.B. über WLAN, verfügbar war. Dies kann beispielsweise im Garagenbereich eines Hauses der Fall sein, wo man aufgrund der Vergrößerung des lokalen Netzwerks nun beispielsweise auch einen Internetzugang für sein Smartphone zur Verfügung hat. Folglich kann durch die erfindungsgemäße Ladevorrichtung das lokale Netzwerk, zum Beispiel in Form eines Heimnetzwerks, nun auf bisher nicht verfügbare Bereiche ausgedehnt werden und dort für weitere Teilnehmer neben dem elektrisch angetriebenen Kraftfahrzeug genutzt werden.

In einer vorteilhaften Ausgestaltung der Erfindung ist es vorgesehen, dass die Ladevorrichtung eine Mode 2-Ladevorrichtung ist. Die Mode 2-Ladevorrichtung ist eine Ladevorrichtung, bei der nach der internationalen Norm IEC 61851-1 der Mode 2 für die Ladung des elektrisch angetriebenen Kraftfahrzeugs vorliegt. Die Norm IEC 61851-1 bezieht sich auf verschiedene Lademodi für elektrisch angetriebene Kraftfahrzeuge. Danach sind vier Lademodi für die Ladung von elektrisch angetriebenen Kraftfahrzeugen bekannt. Bei einem Mode 2 erfolgt die Ladung des elektrisch angetriebenen Kraftfahrzeugs ein- bis dreiphasig per steckerseitig fest codiertem Signal. Der Mode 2 kann auch als Klasse-2-Lademodus oder Ladebetriebsart 2 bezeichnet werden.

Eine weitere vorteilhafte Ausführungsform der Erfindung sieht vor, dass die Ladevorrichtung dazu eingerichtet ist, einen Datenaustausch zwischen dem Kraftfahrzeug und dem weiteren Teilnehmer zu verhindern, wenn die zweite und weitere Verbindung hergestellt ist. Unter dem Datenaustausch ist jeglicher Austausch von Daten zu verstehen, wenn eine Verbindung zwischen dem Kraftfahrzeug und der Ladevorrichtung bzw. zwischen dem weiteren Teilnehmer und der Ladevorrichtung besteht. Ein Datenaustausch erfolgt jedoch nicht zwischen dem Kraftfahrzeug und dem weiteren Teilnehmer. Durch diesen verhinderten Datenaustausch können Daten vom Kraftfahrzeug nicht zum weiteren Teilnehmer über die Ladevorrichtung gelangen und umgekehrt. Dies hat Vorteile hinsichtlich der Sicherheit der Daten. Ferner ist dadurch keine Übertragung eines Computervirus vom Kraftfahrzeug auf den weiteren Teilnehmer oder umgekehrt möglich.

Gemäß einer weiteren vorteilhaften Ausführungsform der Erfindung ist der weitere Teilnehmer ein portables mobiles Endgerät, eine Wireless Local Area Network (WLAN)-Empfängerstation, das elektrisch angetriebene Kraftfahrzeug oder ein anderes Kraftfahrzeug, insbesondere ein Kraftfahrzeug mit einem Verbrennungsmotor. Bei dem portablen mobilen Endgerät kann es sich beispielsweise um ein Smartphone, ein Mobiltelefon, ein Laptop oder ein Notebook handeln. Dies ermöglicht es einem Nutzer, das lokale Netzwerk auch für seine portablen mobilen Endgeräte zu nutzen. Für diese Geräte kann nun in Bereichen, wo das lokale Netzwerk ohne Ladevorrichtung nicht verfügbar wäre, die weitere Verbindung über die weitere Schnittstelle der Ladevorrichtung genutzt werden. Ferner ist es auch möglich, dass das elektrisch angetriebene Kraftfahrzeug oder auch ein Kraftfahrzeug mit Verbrennungsmotor die weitere Verbindung zum lokalen Netzwerk nutzt. So kann der Nutzer auch auf das lokale Netzwerk über das elektrisch angetriebene Kraftfahrzeug zugreifen, auch wenn dieses nicht mit der Ladevorrichtung, beispielsweise über ein Ladekabel der Ladevorrichtung, verbunden ist. Das elektrisch angetriebene Kraftfahrzeug kann folglich auch die weitere Schnittstelle nutzen. Gleiches gilt für ein Kraftfahrzeug mit Verbrennungsmotor, das beispielsweise über Funk mittels der Ladevorrichtung auf das lokale Netzwerk zugreifen kann. Dies bietet sehr große Flexibilität des Nutzers hinsichtlich seiner Nutzungsmöglichkeiten des lokalen Netzwerks.

In einer weiteren vorteilhaften Ausgestaltung der Erfindung ist es vorgesehen, dass die weitere Schnittstelle als eine Ethernet-, eine Wireless Local Area Network-, eine Bluetooth-, eine ZigBee- oder eine Universal Serial Bus-Schnittstelle ausgebildet ist. Ethernet ist eine Technologie, die Software und Hardware für kabelgebundene Datennetze spezifiziert, welche ursprünglich für lokale Datennetze (LANs) gedacht war und daher auch als LAN-Technik bezeichnet wird. Wireless Local Area Network bezeichnet ein lokales Funknetz. Bluetooth ist ein Industriestandard gemäß IEEE 802.15.1 für die Datenübertragung zwischen Geräten über kurze Distanz per Funktechnik (WPAN). ZigBee ist eine Spezifikation für drahtlose Netzwerke mit geringem Datenaufkommen, wie z.B. Hausautomation, Sensornetzwerke oder Lichttechnik. Der Schwerpunkt von ZigBee liegt in kurzreichweitigen Netzwerken (10 bis 100 Meter). Es sind aber auch Reichweiten von mehreren Kilometern möglich. Die ZigBee-Spezifikation erweitert den IEEE 802.15.4-Standard um eine Netzwerk- und Anwendungsschicht. Der Universal Serial Bus (USB) ist ein serielles Bussystem zur Verbindung eines Computers mit externen Geräten. Dies bietet eine große Flexibilität des Nutzers hinsichtlich der weiteren Schnittstelle, welche auf vielfache Weise, sowohl kabellos als auch über Kabel, genutzt werden kann.

In einer weiteren vorteilhaften Ausgestaltung der Erfindung ist vorgesehen, dass ein Ladekabel der Ladevorrichtung die zweite Schnittstelle aufweist, sodass beim Aufladen des elektrisch angetriebenen Kraftfahrzeugs die zweite Verbindung über das Ladekabel herstellbar ist. Sobald das Ladekabel der Ladevorrichtung am elektrisch angetriebenen Kraftfahrzeug eingesteckt worden ist, startet die Abfrage des Zertifikats und eine Authentifizierung wird vorgenommen. Die zweite Verbindung über die zweite Schnittstelle zwischen dem elektrisch angetriebenen Kraftfahrzeug und der Ladevorrichtung wird folglich nur hergestellt, wenn eine Verbindung des elektrisch angetriebenen Kraftfahrzeugs mit der Ladevorrichtung, z.B. über das Ladekabel der Ladevorrichtung, vorliegt. Dies hat den Vorteil, dass während des Ladevorgangs des elektrisch angetriebenen Kraftfahrzeugs seinem Nutzer der Zugriff auf das lokale Netzwerk ermöglicht wird. Datenübertragungskosten werden reduziert und größere Datenmengen können über das lokale Netzwerk des Nutzers geladen werden.

Ferner ist erfindungsgemäß ein Verfahren zum Betreiben der erfindungsgemäßen Ladevorrichtung vorgesehen. Bei dem erfindungsgemäßen Verfahren zum Betreiben der erfindungsgemäßen Ladevorrichtung oder einer vorteilhaften Ausführungsform der erfindungsgemäßen Ladevorrichtung wird über eine erste Schnittstelle der Ladevorrichtung eine erste Verbindung zwischen der Ladevorrichtung und einem lokalen Netzwerk hergestellt. Mittels einer Steuereinrichtung der Ladevorrichtung wird ein vorgegebenes Zertifikat von einem elektrisch angetriebenen Kraftfahrzeug abgefragt und nur im Fall einer erfolgreichen Authentifizierung anhand des vom Kraftfahrzeug bereitgestellten Zertifikats wird eine zweite Verbindung über eine zweite Schnittstelle der Ladevorrichtung zwischen dem Kraftfahrzeug und der Ladevorrichtung hergestellt. Dadurch wird bei hergestellter erster Verbindung ein Datenaustausch zwischen dem lokalen Netzwerk und dem elektrisch angetriebenen Kraftfahrzeug ermöglicht. Über zumindest eine weitere Schnittstelle der Ladevorrichtung wird eine weitere Verbindung zwischen einem weiteren Teilnehmer und der Ladevorrichtung hergestellt, sodass bei hergestellter erster Verbindung ein Datenaustausch zwischen dem lokalen Netzwerk und dem weiteren Teilnehmer ermöglicht wird. Dabei wird die weitere Verbindung ohne Abfrage und Authentifizierung des vorgegebenen Zertifikats hergestellt.

Durch das erfindungsgemäße Verfahren können nun weitere Teilnehmer auf ein lokales Netzwerk zugreifen. Dies ist ohne Abfrage und Authentifizierung über ein vorgegebenes Zertifikat möglich. Bisher war es für ein elektrisch angetriebenes Kraftfahrzeug nur möglich, über eine Ladevorrichtung aufgrund eines Authentifizierungsvorgangs mittels eines Zertifikats Zugang zu einem lokalen Netzwerk zu erhalten. Dass dies nun auch für weitere Teilnehmer möglich ist, minimiert Datenübertragungskosten. In Bereichen, wo das lokale Netzwerk in der Regel nicht mehr ohne Ladevorrichtung verfügbar ist, können nun auch größere Datenmengen über den weiteren Teilnehmer geladen werden.

In einer vorteilhaften Ausgestaltung des Verfahrens ist vorgesehen, dass bei hergestellter erster Verbindung für die zweite Verbindung und/oder weitere Verbindung ein Datenaustausch zum Internet ermöglicht wird. Dies erlaubt es beispielsweise Software-Updates für das Kraftfahrzeug, den Upload gesammelter Verkehrsdaten, den Download von neuer Musik oder die Aktualisierung sozialer Netzwerke über die zweite und/oder weitere Verbindung vorzunehmen.

In einer weiteren vorteilhaften Ausgestaltung des Verfahrens ist es vorgesehen, dass für das Verbinden mit dem lokalen Netzwerk sowie für das Herstellen der ersten, zweiten und/oder weiteren Verbindung dieselben Zugangsdaten abgefragt werden, wobei insbesondere für das Netzwerk sowie für die mittels der Ladevorrichtung bereitstellbaren Verbindungen derselbe Name vergeben wird. Die mittels der Ladevorrichtung bereitstellbaren Verbindungen umfassen die erste, zweite und weitere Verbindung. Dies bedeutet, die Ladevorrichtung dient als ein Repeater und erweitert den Bereich des lokalen Netzwerks. Ein Repeater ist in der Kommunikationstechnik ein elektrischer oder auch optischer Signalverstärker oder eine Vorrichtung, die ein Signal aufbereitet, zur Vergrößerung der Reichweite eines Signals. Ein Repeater befindet sich in einiger Entfernung zum Sender, empfängt dessen Signale und sendet sie in aufbereiteter Form weiter, wodurch eine größere Distanz überbrückt werden kann. Die Reichweite des Netzwerks wird dadurch vergrößert. Bei Einsatz digitaler Übertragungsverfahren kann das Signal zusätzlich vom Repeater decodiert werden, wodurch Signalstörungen, wie Rauschen oder Verzerrungen der Pulsform, entfernt werden. Anschließend wird das Signal wieder neu codiert, moduliert und weiter gesendet. Dies führt z.B. dazu, dass der weitere Teilnehmer, wie beispielsweise ein Smartphone, in Bereichen in denen ohne Erweiterung des Netzwerks kein oder kein guter Internetzugang wäre, nun weiterhin einen guten Internetzugang hat. Ferner hat dies die Vorteile, dass mittels eines vereinfachten, praktischen Verfahrens nicht zwischen den Namen von Netzwerken gewechselt werden muss. Der Nutzer muss sich nicht mehrere Netzwerknamen oder Zugangsdaten merken.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Ladevorrichtung beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:

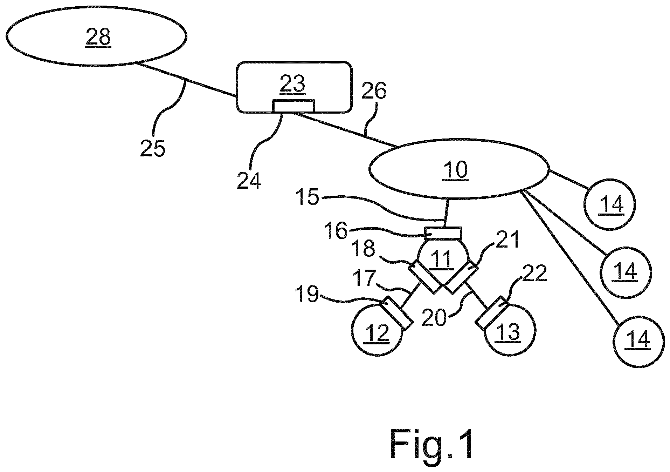

- Fig. 1: eine schematische Darstellung einer Ladevorrichtung für ein elektrisch angetriebenes Kraftfahrzeug, ein mittels eines Routers bereitgestelltes Heimnetzwerk und mehrere Verbindungen, die zwischen der Ladevorrichtung, dem elektrisch angetriebenen Kraftfahrzeug, weiteren Teilnehmern und dem Heimnetzwerk hergestellt worden sind; und

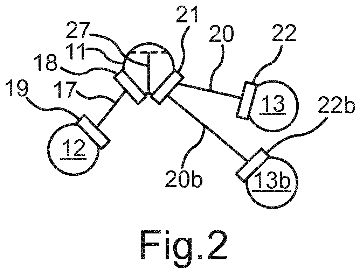

- Fig. 2: eine weitere schematische Darstellung, in welcher die Ladevorrichtung gezeigt und eine Unterbindung eines Datenaustauschs zwischen dem mit der Ladevorrichtung verbundenen Kraftfahrzeug und zwei weiteren mit der Ladevorrichtung verbundenen Teilnehmern dargestellt ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

Fig. 1 zeigt ein lokales Netzwerk 10. Nachfolgend handelt es sich beim dem lokalen Netzwerk 10 beispielhaft um ein Heimnetzwerk eines Nutzers, das z.B. in dem Wohnhaus des Nutzers zur Verfügung steht. Fig. 1 zeigt einen Router 23 mit einer Schnittstelle 24. Dieser Router 23 ist in der Fig. 1 über eine Verbindung 26 mit dem Heimnetzwerk 10 verbunden. Diese Verbindung 26 hat rein illustrative Zwecke und ist nur zur vereinfachten Darstellung in die Fig. 1 aufgenommen worden. In der Praxis wird der Router 23 das Heimnetzwerk 10 bereitstellen und sich über seine Schnittstelle 24 mit anderen Teilnehmern direkt verbinden, wie z.B. mit einer Ladevorrichtung 11 über die erste Schnittstelle 16 der Ladevorrichtung 11. Über eine Verbindung 25 stellt der Router 23 Internet 28 zur Verfügung.

Das Heimnetzwerk 10 ist über eine erste Verbindung 15 mittels der ersten Schnittstelle 16 der Ladevorrichtung 11 mit der Ladevorrichtung 11 verbunden. Die Ladevorrichtung 11 weist eine zweite Schnittstelle 18 auf, die eine zweite Verbindung 17 zu einem elektrisch angetriebenen Kraftfahrzeug 12 über eine entsprechende Schnittstelle 19 des elektrisch angetriebenen Kraftfahrzeugs 12 aufbaut. Dadurch erhält das Kraftfahrzeug 12 mittels der Ladevorrichtung 11 über die erste Verbindung 15 Zugang zu dem Heimnetzwerk 10 im Hause des Nutzers.

Ferner weist die Ladevorrichtung 11 eine weitere Schnittstelle 21 auf, mittels der eine weitere Verbindung 20 zu einem weiteren Teilnehmer 13 aufgebaut werden kann. Bei dem weiteren Teilnehmer handelt es sich nachfolgend stets um ein Smartphone 13. Dabei kann es sich aber auch um jedes andere beliebige, portable, mobile Endgerät handeln. Dieses Smartphone 13 verfügt ebenfalls über eine Schnittstelle 22, um die dritte Verbindung 20 zur Ladevorrichtung 11 eingehen zu können.

Ferner können noch weitere Teilnehmer 14 mit dem Heimnetzwerk 10 im Haus verbunden sein. Dies sind nachfolgend beispielsweise ein weiteres Smartphone, ein Laptop und ein Desktop-Computer im Haus des Nutzers, die auf das Heimnetzwerk 10 zugreifen. Es sind somit Teilnehmer, die mit dem Router 23 verbunden sind und dadurch über das Heimnetzwerk 10 miteinander Daten austauschen können und auch Zugriff auf das Internet 28 haben.

Die Ladevorrichtung 11 umfasst vorliegend ein mobiles Ladekabel zum Laden des elektrisch angetriebenen Kraftfahrzeugs 12 und ist vorliegend z.B. eine Mode 2-Ladevorrichtung. Die erste Schnittstelle 16 der Ladevorrichtung, mittels welcher eine erste Verbindung 15 zwischen der Ladevorrichtung 11 und dem Heimnetzwerk 10 herstellbar ist, ist beispielsweise als WLAN-Schnittstelle der Ladevorrichtung 11 ausgebildet. Dadurch kann die Ladevorrichtung 11 auf das Heimnetzwerk 10 im Haus zugreifen.

Die zweite Schnittstelle 18 der Ladevorrichtung 11, mittels welcher eine zweite Verbindung 17 zwischen dem Kraftfahrzeug 12 und der Ladevorrichtung 11 herstellbar ist, ermöglicht bei hergestellter erster Verbindung 15 einen Datenaustausch zwischen dem Heimnetzwerk 10 und dem Kraftfahrzeug 12. Vorliegend befindet sich z.B. die zweite Schnittstelle 18 im Ladekabel der Ladevorrichtung 11, sodass beim Aufladen des elektrisch angetriebenen Kraftfahrzeugs 12 die zweite Verbindung 17 nur über das Ladekabel der Ladevorrichtung 11 herstellbar ist.

Über eine weitere Schnittstelle 22, mittels welcher eine weitere Verbindung 20 zwischen dem Smartphone 13 und der Ladevorrichtung 11 herstellbar ist, wird bei hergestellter erster Verbindung 15 ein Datenaustausch zwischen dem Heimnetzwerk 10 und dem Smartphone 13 ermöglicht. Durch den Datenaustausch kann beispielsweise auf das Internet 28 zugegriffen werden, worüber z.B. Daten auf das Smartphone 13 gedownloadet werden können.

Eine Steuereinrichtung der Ladevorrichtung ist in Fig. 1 nicht dargestellt. Sie ist jedoch Teil der Ladevorrichtung 11. Die Steuereinrichtung ist dazu eingerichtet, ein vorgegebenes Zertifikat vom elektrisch angetriebene Kraftfahrzeug 12 abzufragen und nur im Fall einer erfolgreichen Authentifizierung anhand des vom Kraftfahrzeug 12 bereitgestellten Zertifikats die zweite Verbindung 17 herzustellen und die weitere Verbindung 20 ohne Abfrage oder Authentifizierung des vorgegebenen Zertifikats herzustellen. Das Kraftfahrzeug 12 benötigt folglich ein Zertifikat, um über das Heimnetzwerk 10 Zugang zum Internet 28 zu erhalten, während dies für weitere Teilnehmer, wie beispielsweise dem Smartphone 13, nicht notwendig ist.

Ein Datenaustausch zwischen dem Kraftfahrzeug 12 und dem Smartphone 13 ist nicht möglich, auch bei hergestellter zweiter und weiterer Verbindung 17 und 20. Dies hat den Vorteil, dass Daten vom Kraftfahrzeug 12 nicht über die Ladevorrichtung 11 zu dem Smartphone 13 gelangen können und umgekehrt. Dies ist aus Sicherheits- und Datenschutzgründen sehr vorteilhaft. Ferner können Computerviren vom Smartphone 13 nicht auf das Kraftfahrzeug 12 übertragen werden und umgekehrt. Die weitere Schnittstelle 22 ist vorliegend z.B. als WLAN Schnittstelle ausgebildet.

Nachfolgend wird ein Verfahren zum Betreiben der Ladevorrichtung 11 erläutert. Es soll nachfolgend davon ausgegangen werden, dass es sich bei dem weiteren Teilnehmer um ein Smartphone 13 handelt und die Reichweite des Heimnetzwerks 10 durch das Verfahren derart erweitert wird, dass auch das Smartphone 13 Zugriff auf das Internet 28 hat.

Ein Heimnetzwerk 10 ist im Haus eines Nutzers vorhanden. Der Router 23 stellt das Heimnetzwerk 10 bereit und damit eine Verbindung 25 zum Internet 28. Die Reichweite des Heimnetzwerks 10 ist naturgemäß beschränkt und reicht also beispielsweise nur bis zur Garage des Hauses. Dort befindet sich die Ladevorrichtung 11, z.B. eine Mode 2-Ladevorrichtung, die ein mobiles Ladekabel umfasst, das an einer Wandhalterung befestigt werden kann.

Das Verfahren erweitert nun die Reichweite des Heimnetzwerks 10 derart, dass auch die Ladevorrichtung 11 mit dem Ladekabel auf das Heimnetzwerk 10 zugreifen kann und Zugang zum Internet 28 hat. Das Ladekabel wird über die entsprechenden Schnittstellen 18, 19 mit dem elektrisch angetriebene Kraftfahrzeug 12 verbunden. Das elektrisch angetriebene Kraftfahrzeug 12 erhält darüber Zugang zum Internet 28.

Über die weitere Schnittstelle 21 der Ladevorrichtung kann auch das Smartphone 13 als weiterer Teilnehmer Zugang zum Internet 28 erhalten. Der Datenaustausch zwischen Smartphone 13 und dem Heimnetzwerk 10 erfolgt bei hergestellter Verbindung 15 der Ladevorrichtung 11. Die zugehörige erste Schnittstelle 16 der Ladevorrichtung 11 ist beispielsweise als WLAN-Schnittstelle ausgebildet.

Die Ladevorrichtung 11 erweitert so den Zugriffsbereich auf das Heimnetzwerk 10. So können über das Heimnetzwerk 10 größere Datenmengen geladen werden, wie zum Beispiel Software-Updates für das Kraftfahrzeug 12 oder gesammelte Verkehrsdaten, der Download von neuer Musik bzw. die Aktualisierung sozialer Netzwerke über das Smartphone 13 vorgenommen werden. Dadurch entstehen keine Übertragungskosten für den Automobilhersteller. In der Regel ist eine SIM-Karte im Kraftfahrzeug 12 verbaut. Wenn nun für Datenübertragungen über die SIM-Karte Kosten entstehen, würden diese beim Automobilhersteller anfallen. Dies kann durch die Ladevorrichtung 11 umgangen werden.

Fig. 2 zeigt eine weitere schematische Darstellung, in welcher die Ladevorrichtung 11 gezeigt und eine Unterbindung eines Datenaustauschs zwischen dem mit der Ladevorrichtung 11 verbundenen Kraftfahrzeug 12 und zwei weiteren mit der Ladevorrichtung 11 verbundenen Teilnehmern 13, 13b dargestellt ist.

Fig. 2 unterscheidet sich folglich von Fig. 1 darin, dass ein weiterer Teilnehmer neben dem Smartphone 13, beispielsweise ein Laptop 13b, Zugang zum Internet 28 über die Ladevorrichtung 11 erhalten kann. Ferner ist in Fig. 2 zusätzlich eine Barriere 27 dargestellt, die verhindert, dass ein Datenaustausch zwischen dem Smartphone 13 bzw. dem Laptop 13b und dem Kraftfahrzeug 12 erfolgen kann. Dies ermöglicht einen verbesserten Datenschutz und erhöht die Sicherheit für den Nutzer. Ferner können durch die Barriere 27 keine Computerviren vom Smartphone 13 bzw. vom Laptop 13b auf das Kraftfahrzeug 12 übertragen werden und umgekehrt.

## Patentansprüche

1. Ladevorrichtung (11) zum Laden eines elektrisch angetriebenen Kraftfahrzeugs (12), umfassend:
- eine erste Schnittstelle (16), mittels welcher eine erste Verbindung (15) zwischen der Ladevorrichtung (11) und einem lokalen Netzwerk (10) herstellbar ist;
- eine zweite Schnittstelle (18), mittels welcher eine zweite Verbindung (17) zwischen dem Kraftfahrzeug (12) und der Ladevorrichtung (11) herstellbar ist, sodass bei hergestellter erster Verbindung (15) ein Datenaustausch zwischen dem lokalen Netzwerk (10) und dem Kraftfahrzeug (12) ermöglicht wird;
- zumindest eine weitere Schnittstelle (21), mittels welcher eine weitere Verbindung (20) zwischen einem weiteren Teilnehmer (13, 13b) und der Ladevorrichtung (11) herstellbar ist, sodass bei hergestellter erster Verbindung (15) ein Datenaustausch zwischen dem lokalen Netzwerk (10) und dem weiteren Teilnehmer (13, 13b) ermöglicht wird;
- eine Steuereinrichtung, welche dazu eingerichtet ist,
▪ ein vorgegebenes Zertifikat vom Kraftfahrzeug (12) abzufragen und nur im Fall einer erfolgreichen Authentifizierung anhand des vom Kraftfahrzeug (12) bereitgestellten Zertifikats die zweite Verbindung (17) herzustellen; und
▪ die weitere Verbindung (20) ohne Abfrage und Authentifizierung des vorgegebenen Zertifikats herzustellen;
**gekennzeichnet dadurch, dass** die Ladevorrichtung (11) dazu eingerichtet ist, einen Datenaustausch zwischen dem Kraftfahrzeug (12) und dem weiteren Teilnehmer (13, 13b) zu verhindern, wenn die zweite (17) und weitere Verbindung (20) hergestellt ist.

2. Ladevorrichtung (11) nach Anspruch 1,
**dadurch gekennzeichnet, dass**
die Ladevorrichtung eine Mode 2-Ladevorrichtung ist.

3. Ladevorrichtung (11) nach einem der vorhergehenden Ansprüche,
**dadurch gekennzeichnet, dass**
der weitere Teilnehmer (13, 13b) ein portables mobiles Endgerät, eine Wireless Local Area Network-Empfängerstation, das Kraftfahrzeug (12) oder ein anderes Kraftfahrzeug, insbesondere ein Kraftfahrzeug mit einem Verbrennungsmotor, ist.

4. Ladevorrichtung (11) nach einem der vorhergehenden Ansprüche,
**dadurch gekennzeichnet, dass**
die weitere Schnittstelle (21) als eine Ethernet-, eine Wireless Local Area Network-, eine Bluetooth-, eine ZigBee- oder eine Universal Serial Bus-Schnittstelle ausgebildet ist.

5. Ladevorrichtung (11) nach einem der vorhergehenden Ansprüche,
**dadurch gekennzeichnet, dass**
ein Ladekabel der Ladevorrichtung (11) die zweite Schnittstelle (18) aufweist, sodass beim Aufladen des elektrisch angetriebenen Kraftfahrzeugs (12) die zweite Verbindung (17) über das Ladekabel herstellbar ist.

6. Verfahren zum Betreiben einer Ladevorrichtung (11) nach einem der vorhergehenden Ansprüche, bei welchem:
- über eine erste Schnittstelle (16) der Ladevorrichtung (11) eine erste Verbindung (15) zwischen der Ladevorrichtung (11) und einem lokalen Netzwerk (10) hergestellt wird;
- mittels einer Steuereinrichtung der Ladevorrichtung (11) ein vorgegebenes Zertifikat von einem Kraftfahrzeug (12) abgefragt und nur im Fall einer erfolgreichen Authentifizierung anhand des vom Kraftfahrzeug (12) bereitgestellten Zertifikats eine zweite Verbindung (17) über eine zweite Schnittstelle (18) der Ladevorrichtung (11) zwischen dem Kraftfahrzeug (12) und der Ladevorrichtung (11) hergestellt wird, sodass bei hergestellter erster Verbindung (15) ein Datenaustausch zwischen dem lokalen Netzwerk (10) und dem Kraftfahrzeug (12) ermöglicht wird;
- über zumindest eine weitere Schnittstelle (21) der Ladevorrichtung (11) eine weitere Verbindung (20) zwischen einem weiteren Teilnehmer (13, 13b) und der Ladevorrichtung (11) hergestellt wird, sodass bei hergestellter erster Verbindung (15) ein Datenaustausch zwischen dem lokalen Netzwerk (10) und dem weiteren Teilnehmer (13, 13b) ermöglicht wird, wobei die weitere Verbindung (20) ohne Abfrage und Authentifizierung des vorgegebenen Zertifikats hergestellt wird;
- gekenzeichnet dadurch, dass mittels der Ladevorrichtung (11) ein Datenaustausch zwischen dem Kraftfahrzeug (12) und dem weiteren Teilnehmer (13, 13b) verhindert wird, wenn die zweite (17) und weitere Verbindung (20) hergestellt ist.

7. Verfahren nach Anspruch 6,
**dadurch gekennzeichnet, dass**
bei hergestellter erster Verbindung (15) für die zweite Verbindung (17) und/oder weitere Verbindung (20) ein Datenaustausch zum Internet (28) ermöglicht wird.

8. Verfahren nach Anspruch 6 oder 7,
**dadurch gekennzeichnet, dass**
für das Verbinden mit dem lokalen Netzwerk (10) sowie für das Herstellen der ersten (15), zweiten (17) und/oder weiteren Verbindung (20) dieselben Zugangsdaten abgefragt werden, wobei insbesondere für das lokale Netzwerk (10) sowie für die mittels der Ladevorrichtung (11) bereitstellbaren Verbindungen (15, 17, 20) derselbe Name vergeben wird.

## Claims

1. Charging device (11) for charging an electrically driven motor vehicle (12), comprising:
- a first interface (16) by means of which a first connection (15) can be established between the charging device (11) and a local network (10);
- a second interface (18) by means of which a second connection (17) can be established between the motor vehicle (12) and the charging device (11), such that when the first connection (15) has been established an exchange of data is made possible between the local network (10) and the motor vehicle (12);
- at least one further interface (21) by means of which a further connection (20) can be established between a further subscriber (13, 13b) and the charging device (11), such that when the first connection (15) has been established an exchange of data is made possible between the local network (10) and the further subscriber (13, 13b);
- a control device which is configured
- to request a predetermined certificate from the motor vehicle (12) and to establish the second connection (17) only in the case of a successful authentication on the basis of the certificate provided by the motor vehicle (12); and
- to establish the further connection (20) without requesting and authenticating the predetermined certificate;
**characterised in that**
the charging device (11) is configured to prevent an exchange of data between the motor vehicle (12) and the further subscriber (13, 13b) when the second (17) and further connection (20) is established.

2. Charging device (11) according to claim 1,
**characterised in that**
the charging device is a mode-2 charging device.

3. Charging device (11) according to any of the preceding claims,
**characterised in that**
the further subscriber (13, 13b) is a portable mobile end device, a Wireless Local Area Network receiver station, the motor vehicle (12) or another motor vehicle, in particular a motor vehicle with an internal combustion engine.

4. Charging device (11) according to any of the preceding claims,
**characterised in that**
the further interface (21) is in the form of an Ethernet, a Wireless Local Area Network, a Bluetooth, a ZigBee or a Universal Serial Bus interface.

5. Charging device (11) according to any of the preceding claims,
**characterised in that**
a charging cable of the charging device (11) has the second interface (18), such that when charging the electrically driven motor vehicle (12) the second connection (17) can be established by the charging cable.

6. Method for operating a charging device (11) according to any of the preceding claims, in which:
- via a first interface (16) of the charging device (11) a first connection (15) is established between the charging device (11) and a local network (10);
- by means of a control device of the charging device (11) a predetermined certificate is requested from a motor vehicle (12) and only in the case of a successful authentication on the basis of the certificate provided by the motor vehicle (12) a second connection (17) is established via a second interface (18) of the charging device (11) between the motor vehicle (12) and the charging device (11), such that when the first connection (15) has been established an exchange of data is made possible between the local network (10) and the motor-vehicle (12);
- via at least one second interface (21) of the charging device (11) a further connection (20) is established between a further subscriber (13, 13b) and the charging device (11), such that when the first connection (15) is established an exchange of data is made possible between the local network (10) and the further subscriber (13, 13b), wherein the further connection (20) is established without requesting and authenticating the predetermined certificate;
- **characterised in that** by means of the charging device (11) an exchange of data between the motor vehicle (12) and the further subscriber (13, 13b) is prevented when the second (17) and further connection (20) is established.

7. Method according to claim 6,
**characterised in that**
when the first connection (15) is established, an exchange of data to the Internet (28) is made possible for the second connection (17) and/or further connection (20).

8. Method according to claim 6 or 7,
**characterised in that**
the same access data are requested for the connection with the local network (10) as well as for the establishing of the first (15), second (17) and/or further connection (20), wherein the same name is assigned particularly for the local network (10) as well as for the connections (15, 17, 20) which can be provided by means of the charging device (11).

## Revendications

1. Dispositif de recharge (11) pour la recharge d'un véhicule automobile (12) entraîné électriquement, comprenant :
- une première interface (16) au moyen de laquelle une première liaison (15) entre le dispositif de recharge (11) et un réseau local (10) peut être établie ;
- une seconde interface (18) au moyen de laquelle une seconde liaison (17) entre le véhicule automobile (12) et le dispositif de recharge (11) peut être établie de sorte qu'en cas de première liaison (15) établie un échange de données entre le réseau local (10) et le véhicule automobile (12) soit permis ;
- au moins une autre interface (21) au moyen de laquelle une autre liaison (20) entre un autre participant (13, 13b) et le dispositif de recharge (11) peut être établie de sorte qu'en cas de première liaison (15) établie un échange de données entre le réseau local (10) et l'autre participant (13, 13b) soit permis ;
- un dispositif de commande qui est aménagé afin de
- demander un certificat prédéfini du véhicule automobile (12) et d'établir seulement dans le cas d'une authentification réussie au moyen du certificat fourni par le véhicule automobile (12) la seconde liaison (17) ; et
- d'établir l'autre liaison (20) sans demande ni authentification du certificat prédéfini ;
**caractérisé en ce que**
le dispositif de recharge (11) est aménagé afin d'empêcher un échange de données entre le véhicule automobile (12) et l'autre participant (13, 13b) lorsque la seconde (17) et l'autre liaison (20) sont établies.

2. Dispositif de recharge (11) selon la revendication 1,
**caractérisé en ce que**
le dispositif de recharge est un dispositif de recharge de mode 2.

3. Dispositif de recharge (11) selon l'une des revendications précédentes,
**caractérisé en ce que**
l'autre participant (13, 13b) est un terminal mobile portable, une station de réception de réseau local sans fil, le véhicule automobile (12) ou un autre véhicule automobile, en particulier un véhicule automobile avec un moteur à combustion interne.

4. Dispositif de recharge (11) selon l'une des revendications précédentes,
**caractérisé en ce que**
l'autre interface (21) est réalisée comme une interface Ethernet, une interface de réseau local sans fil, une interface Bluetooth, une interface ZigBee ou une interface de bus série universel.

5. Dispositif de recharge (11) selon l'une des revendications précédentes,
**caractérisé en ce que**
un câble de recharge du dispositif de recharge (11) présente la seconde interface (18) de sorte que lors de la charge du véhicule automobile (12) entraîné électriquement la seconde liaison (17) puisse être établie par le biais du câble de recharge.

6. Procédé de fonctionnement d'un dispositif de recharge (11) selon l'une des revendications précédentes, pour lequel :
- une première liaison (15) entre le dispositif de recharge (11) et un réseau local (10) est établie par le biais d'une première interface (16) du dispositif de recharge (11) ;
- au moyen d'un dispositif de commande du dispositif de recharge (11) un certificat prédéfini d'un véhicule automobile (12) est demandé et seulement dans le cas d'une authentification réussie au moyen du certificat fourni par le véhicule automobile (12) une seconde liaison (17) est établie par le biais d'une seconde interface (18) du dispositif de recharge (11) entre le véhicule automobile (12) et le dispositif de recharge (11) de sorte qu'en cas de première liaison (15) établie un échange de données entre le réseau local (10) et le véhicule automobile (12) soit permis ;
- une autre liaison (20) entre un autre participant (13, 13b) et le dispositif de recharge (11) est établie par le biais d'au moins une autre interface (21) du dispositif de recharge (11) de sorte qu'en cas de première liaison (15) établie un échange de données entre le réseau local (10) et l'autre participant (13, 13b) soit permis, dans lequel l'autre liaison (20) est établie sans demande ni authentification du certificat prédéfini ;
- **caractérisé en ce qu'**au moyen du dispositif de recharge (11) un échange de données entre le véhicule automobile (12) et l'autre participant (13, 13b) est empêché, lorsque la seconde (17) et l'autre liaison (20) sont établies.

7. Procédé selon la revendication 6,
**caractérisé en ce que**
en cas de première liaison (15) établie pour la seconde liaison (17) et/ou l'autre liaison (20) un échange de données avec l'Internet (28) est permis.

8. Procédé la revendication 6 ou 7,
**caractérisé en ce que**
pour la liaison avec le réseau local (10) ainsi que pour l'établissement des première (15), deuxième (17) et/ou autre liaison (20) les mêmes données d'accès sont demandées, dans lequel en particulier pour le réseau local (10) ainsi que pour les liaisons (15, 17, 20) pouvant être fournies au moyen du dispositif de recharge (11) le même nom est attribué.
